Europäisches Patentamt

European Patent Office

Office européen des brevets

(19)

(11) Veröffentlichungsnummer: **0 303 260 B1**

(12) **EUROPÄISCHE PATENTSCHRIFT**

(45) Veröffentlichungstag der Patentschrift: **02.01.92**

(21) Anmeldenummer: **88113025.6**

(22) Anmeldetag: **10.08.88**

(51) Int. Cl.⁵: **A22C 11/00**

(54) **Vorsatzgerät für einen Wurstfüller.**

(30) Priorität: **11.08.87 DE 3726703**

(43) Veröffentlichungstag der Anmeldung:
**15.02.89 Patentblatt 89/07**

(45) Bekanntmachung des Hinweises auf die
Patenterteilung:
**02.01.92 Patentblatt 92/01**

(84) Benannte Vertragsstaaten:
**BE DE ES FR GB IT NL SE**

(56) Entgegenhaltungen:
**EP-A- 0 040 775       CH-A- 657 507
DE-A- 1 432 481       FR-A- 2 493 678
GB-A- 268 687        GB-A- 891 175
NL-A- 6 400 923      US-A- 3 092 499
US-A- 3 346 394      US-A- 4 268 532**

(73) Patentinhaber: **H. MAURER + SÖHNE RAUCH-
UND WÄRMETECHNIK GMBH & CO. KG
Obere Rheinstrasse 41
W-7752 Insel Reichenau(DE)**

(72) Erfinder: **Lemmer, Josef
88 Canova Road. S.W.Calgary
Alberta T2W 2A7(CA)**

(74) Vertreter: **KOHLER SCHMID + PARTNER Patentanwälte
Ruppmannstrasse 27
W-7000 Stuttgart 80(DE)**

# Beschreibung

Die Erfindung betrifft ein Vorsatzgerät für einen Wurstfüller zur Herstellung darmloser Würste, mit einer am Abfüllstutzen des Wurstfüllers anschließbaren, mehrere hintereinander geschaltete Wärmestationen aufweisenden Rohranordnung.

Bei der Herstellung von Würsten, insbesondere Rostbratwürsten, sog. Breakfast sausages, hotdogs, Grillwürstchen u. dgl. wird die Wurstmasse in Natur- oder Kunstdärmen mit Hilfe eines Füllhorns von ca. 25 bis 30 cm Länge an einem Wurstfüller gefüllt. Nach dem Einfüllen der Wurstmasse in die Därme erfolgt das Kochen der Wurstmasse in einem Kochschrank, um die Wurstmasse zu garen. Danach werden die Würste in ein Wasserbad überführt. Bei einigen Wurstsorten erfolgt nach dem Garvorgang das sogenannte Schälen bzw. Enthäuten der Würstchen, was zumeist im Wasserbad erfolgt, wenn die Würste auf Länge zugeschnitten werden. Das Enthäuten bzw. Schälen der Würste kann aber auch maschinell mittels sogenannter Schälmaschinen erfolgen.

Die Verwendung von Kunstdärmen ist teuer, was umso mehr ins Gewicht fällt, weil bei der Herstellung darmloser Würste mit einem nachgeschalteten Schälvorgang die Haut wiederum entfernt werden muß und weggeworfen wird. Abgesehen von dem damit verbundenen Kostenaufwand ist aber auch das Aufziehen der Därme auf den Abfüllstutzen bzw. das Füllhorn der Wurstmaschine schwierig und umständlich und verlangt ein geschicktes Bedienungspersonal. Dieser Arbeitsprozeß ist insbesondere bei kleinkalibrigen Wurstsorten sehr arbeitsaufwendig. Das Aufziehen der Därme auf den Abfüllstutzen der Wurstmaschine, der gesonderte Brühprozeß nach dem Einfüllen der Wurstmasse in die Därme und das zusätzliche Entfernen der Schäldärme führt in der Praxis dazu, daß je Wurstmaschine bei einem kontinuierlichen Durchsatz etwa 6 bis 8 Personen eingesetzt werden müssen. Hinzu kommt, daß aufgrund dieser verschiedenen Arbeitsprozesse die Einhaltung der geforderten Hygienebestimmungen außerordentlich schwierig bzw. mit entsprechend hohem Aufwand verbunden ist.

Durch die DD-A-246 699 ist ein Vorsatzgerät bekannt geworden, das an den Abfüllstutzen der Wurstfüllmaschine anschließbar ist, an den normalerweise die Därme zum Einfüllen des Wurstbrätes angeschlossen werden. Mit diesem bekannten Vorsatzgerät sollen darmlose Würste dadurch erzeugt werden, daß das Brät in ein Rohr eingedrückt wird, das rohrförmige Elektroden aufweist, die durch den elektrischen Strom nicht leitende Rohrabschnitte voneinander getrennt sind. An die Elektroden wird ein niederfrequenter Strom angeschlossen, der von einer Elektrode durch das Brät in dem nicht leitenden Rohrabschnitt hindurch zu der benachbarten Elektrode fließt und dabei das Brät in diesem Rohrabschnitt erwärmt. Bei entsprechender Vervielfachung der nicht leitenden Rohrabschnitte mit den Elektroden soll das Brät am Ende voll durchgegart sein. Zum einen ist aber das zwischen den Elektroden längs des Rohrabschnittes verlaufende elektrische Feld nur dann einigermaßen gleichmäßig über den Rohrquerschnitt verteilt, wenn die Länge des Rohrabschnittes relativ groß gegen den Rohrdurchmesser ist. Zum anderen sorgt schon der Skin-Effekt dafür, daß die Stromlinien an den Umfang des Querschnittes verdrängt werden und die Stromdichte nicht zu hoch gewählt werden kann. Schließlich ändert sich die Leitfähigkeit mit dem Grad der Verfestigung des Brätes. Auch ist die Leitfähigkeit des Brätes, durch seine Bestandteile bedingt, über den Querschnitt des Rohres selten genau gleich, der Strom sucht sich stets einen Weg des geringsten Widerstandes von Elektrode zu Elektrode. Eine gleichmäßige Verteilung der Stromdichte und damit eine gleichmäßige Erwärmung des ganzen Querschnittes kann daher mit dieser Anordnung nicht erreicht werden. Stattet man aber diese bekannte Anordnung mit einer so großen Länge aus, daß auch Bereiche mit geringer Stromdichte garen, so treten in den anderen, eine größere Stromdichte aufweisenden Bereichen bereits Zersetzungen des Brätes auf.

Das gleiche gilt für die Anordnung nach der US-A-3 235 388, die sich von der zuletzt erwähnten Anordnung im wesentlichen nur dadurch unterscheidet, daß bei der Anordnung nach der US-A-3 235 388 ein hochfrequenter Wechselstrom verwendet wird, was die Verdrängung der Strompfade an den Umfang des Querschnittes sehr verstärkt.

Bei der Anordnung nach der DE-A-27 46 680 soll der durch zylindrische Elektroden erzeugte Strom von nur 50 Hz in dem Rohrabschnitt zwischen den Elektroden im wesentlichen den Kern erwärmen, wodurch dessen Leitfähigkeit dort steigt. Die äußeren Bereiche am Umfang des Stranges sollen durch Erhitzen der Rohroberfläche von außen fertig gegart werden. Diese Anordnung bedingt einen großen Platzbedarf und eine aufwendige Apparatur, die trotzdem nicht gewährleistet, daß man ein einwandfreies, gleichmäßig durchgegartes bzw. durchgekochtes Produkt erhält.

Aufgabe der Erfindung ist es, ein einfaches und schnelles Herstellen von darmlosen Würsten mit geringem Arbeitsaufwand zu gewährleisten.

Diese Aufgabe wird erfindungsgemäß dadurch gelöst, daß der Rohranordnung vor der ersten Wärmestation eine Kühlstation vorgeschaltet ist und daß die Rohranordnung mit dem Abfüllstutzen über einen sich zur Rohranordnung hin aufweitenden Verbindungsstutzen verbunden ist, an den sich ein aus einer Anzahl von parallel angeordneten Rohren bestehendes Rohrbündel anschließt.

Nach Maßgabe der Erfindung erfolgt die Wurstherstellung dadurch, daß die Wurstmasse aus der Wurstmaschine bzw. dem Wurstfüller in ein an dem Abfüllstutzen des Wurstfüllers angeschlossenes Rohr bzw. Rohrbündel überführt und darin über eine größere Länge transportiert wird, wobei die Wurstmasse verschiedene Stationen durchläuft. Dabei wird die Wurstmasse im Anschluß an den Wurstfüller in einer ersten Zone einem sog. Umrötvorgang bei einer Temperatur von unterhalb 50° Celsius unterzogen, so daß sich eine ausreichend stabile Außenhaut der im Rohr transportierten Wurstmasse bildet. Im Anschluß an diese Zone gelangt die Wurstmasse in eine Zone erhöhter Temperatur, nämlich je nach herzustellender Wurst zwischen 75 und 90° Celcius, wo die Wurstmasse dann auf den gewünschten Garzustand gebracht wird. Beim Austritt aus den Rohren braucht die Wurst dann lediglich von Hand oder automatisch auf gewünschte Länge abgeschnitten zu werden. Mit diesem Gerät entfällt somit der Einsatz von Därmen vollständig. Damit entfällt auch der beim Stand der Technik erforderliche anschließende Schälvorgang. Da zudem das Garen der Wurstmasse innerhalb des Rohres bzw. des Rohrbündels und damit unmittelbar in der an den Wurstfüller angeschlossenen Einheit erfolgt, verringert sich die Anzahl der einzelnen Arbeitsprozesse, wodurch auch eine hygienisch einwandfreie Fertigung von Würsten gewährleistet ist. Infolge des Wegfalls der manuellen Tätigkeiten ergeben sich auch entsprechende Kosteneinsparungen bei der Fertigung.

Das Gerät kann je nach gewünschter Kapazität mit beliebig vielen Rohren in verschiedenen Formen und/oder Kalibern ausgerüstet werden. In einer zweckmäßigen Ausführungsform beträgt der Durchmesser der Rohre 20 bis 22 mm. Bei diesem Rohrdurchmesser beträgt die Länge des Rohrbündels etwa 3,5 m. Die Länge kann aber auch größer sein und ist letztlich abhängig vom gewünschten Garzustand des Produktes und vom Ausmaß der Kaliber der Rohre.

Nach einer zweckmäßigen Ausführungsform der Erfindung ist den Wärmestationen eine Kühlstation vorgeschaltet. Durch die Kühlstation wird gewährleistet, daß die Wurstmasse vor dem Einbringen in die einzelnen Rohre des Rohrbündels noch nicht verhärtet ist, um ein einwandfreies Einbringen der Wurstmasse in die Rohre der Rohranordnung zu gewährleisten. In vorteilhafter Weise ist somit die Kühlstation, in der die Wurstmasse im wesentlichen auf Umgebungstemperatur gehalten wird, am oder nahe dem Übergang vom Abfüllstutzen des Wurstfüllers zur Rohranordnung angeordnet. Die Kühlung ist immer dann erforderlich, wenn die für den Wärmevorgang in den Wärmestationen erforderliche Wärme sich in den Übergangsbereich vom Abfüllstutzen des Wurstfüllers zur Rohranordnung auswirkt. Bei entsprechender Abisolierung der Rohranordnung könnte eine solche Kühlstation ggf. entfallen.

Die Kühlstation gewährleistet auch, daß das Brät in die Wärmestationen mit einer vorgegebenen Temperatur eintritt und daß, wenn ein trichterförmiger Bauteil vorgeschaltet ist, das aus dem Wurstfüller austretende Brät auf mehrere Rohrmündungen gleichmäßig verteilt wird.

Bei einer Ausführungsform der Erfindung bestehen die Rohre der Rohranordnung aus rostfreiem Stahl. Die Beheizung der Rohre kann mittelbar über einen Wärmeträger erfolgen, insbesondere über Wasser oder Öl, das durch geeignete Heizelemente, insbesondere Heizstäbe, erhitzt wird. Um eine konstante Temperatur in den einzelnen Zonen aufrechtzuerhalten, erfolgt eine Steuerung durch Thermostate. Hinzu kommt, daß die einzelnen Zonen durch Querwände voneinander unterteilt sind, so daß unabhängige Kammern zur Aufnahme der Wärmeträger gebildet werden. Die Aufheizung kann durch Elektrizität, Gas, Öl, Dampf od. dgl. erreicht werden. Aus Sicherheitsgründen können Ausdehnungsbehälter mit Sicherheitsventilen vorgesehen sein. Insbesondere im Bereich der Kühlstation ist ein Überlauf ausgebildet.

Zweckmäßige Weiterbildungen der Erfindung sind durch die in den Unteransprüchen enthaltenen Merkmale gekennzeichnet.

Bei einer Ausführungsform der Erfindung sind anstelle eines die Wärme auf die Rohrabschnitte übertragenden Wärmeträgers als Heizquelle ein oder mehrere Mikrowellen erzeugende Einrichtungen vorgesehen und die Rohrabschnitte, in denen das Brät erwärmt werden soll, bestehen aus einem Mikrowellen durchlassenden Werkstoff. Durch die Anwendung von direkter Beheizung des Gerätes durch Mikrowellen wird eine über den Querschnitt gleichmäßige Verfestigung des Brätes erzeugt. Eine derartige Erhitzung durch Mikrowellen kann bereits auf der ersten Wärmestation vorgenommen werden, in der das Brät lediglich auf eine zum Röten erforderliche Temperatur gebracht wird. Mikrowellen als Heizquelle können jedoch auch in anderen Wärmestationen verwendet werden, wobei einige Wärmestationen noch mit indirekter Beheizung und Wärmeträgern arbeiten. Mit Mikrowellenerzeugern als Heizquellen können auch alle Wärmestationen ausgerüstet sein.

Bei einer Ausführungsform der Erfindung folgt auf die erste Wärmestation ein vorzugsweise unbeheizter Rohrabschnitt, in dem das Brät höchstens die in der ersten Wärmestation erlangte Temperatur, ggf. auch eine etwas niedrigere Temperatur, aufweist. In diesem Abschnitt soll dem Brät die Zeit gegeben werden, die es braucht, um den in der ersten Wärmestation eingeleiteten Rötungsprozeß zu vollenden. Die Länge dieser unbeheizten Zone ist abhängig von der Reaktionsfähigkeit (Rötewilligkeit) des Wurstbrätes. Selbstverständlich ist die erste Wärmestation und sind auch die anderen Wärmestationen in Abhängigkeit von der Durchflußgeschwindigkeit und des Rohrquerschnittes so eingestellt, daß sich eine gleichmäßige Erwärmung und Koagulierung des Wurstbrätes über den gesamten Rohrquerschnitt ergibt. Die Anwendung von Mikrowellen als Heizquelle hat jedoch den Vorteil, daß sie eine wesentliche Verkürzung des Kochvorganges und der ganzen Anordnung ermöglicht.

Das während des Erwärmungs- bzw. Gar- oder Kochprozesses aus dem Brät freiwerdende Wasser ist in den Rohren gefangen und tritt bei den bekannten Anordnungen zusammen mit der fertig gekochten Wurstmasse aus der Mündung des Vorsatzgerätes aus. Dort kann es zwar abgefangen werden, doch bilden sich im Rohr an der Wurstoberfläche kleinere oder größere Wassertaschen, die eine glatte Ausbildung der darmlosen Wurstoberfläche verhindern.

Daher sind bei einer Ausführungsform der Erfindung in die Rohrwandungen Vorrichtungen zum Abführen von beim Erwärmen des Brätes freiwerdender Flüssigkeit aus dem Rohrquerschnitt vorgesehen. Derartige Vorrichtungen können unabhängig von der speziellen Heizquelle in den Wärmestationen und auch unabhängig davon bei einer Ausführungsform der Erfindung verwirklicht sein, ob bei dieser Ausführungsform eine Kühlzone zwischen Wurstfüller und Vorsatzgerät angeordnet ist. Insbesondere können diese Entwässerungsvorrichtungen an den der ersten Wärmestation unmittelbar folgenden Rohrabschnitten vorgesehen sein.

Diese Vorrichtungen zum Abführen von beim Garen oder Kochen des Brätes austretender Flüssigkeit können auf verschiedene Weise verwirklicht sein. Beispielsweise können bei waagrecht verlaufenden Rohrabschnitten an der Unterseite der Rohr Öffnungen vorgesehen sein, die so klein sind, daß die Flüssigkeit ohne Brätanteile nach unten aus dem Rohrquerschnitt austreten kann. Bei anderen Ausführungsformen können die Rohre einen muffenförmig erweiterten Abschnitt aufweisen, in den der nächste Rohrabschnitt unter Bildung eines ringförmigen Spaltes eingesteckt ist, wobei sich die Muffe in Richtung gegen den Brätstrom erweitert, so daß durch diesen Spalt kein Brät austritt.

Die zum Entwässern dienenden Aussparungen können in mindestens eine Sammelleitung münden, die die Flüssigkeit ggf. durch eine Heizquelle oder durch ein Wärmeübertragungsmedium hindurch nach außen abführt.

Nachfolgend wird ein Ausführungsbeispiel der Erfindung anhand der Zeichnung beschrieben. Darin zeigen:

Fig. 1 eine schematische perspektivische Ansicht einer Ausführungsform eines Vorsatzgeräts nach der Erfindung sowie

Fig. 2 eine teilweise aufgebrochene perspektivische Ansicht des freien Endes des Geräts nach Fig. 1.

Fig. 3 einen Teil eines Blockes, in dem rohrförmige Aussparungen für das Brät vorgesehen sind im Schnitt schräg von unten betrachtet;

Fig. 4 eine der Fig. 3 entsprechende Darstellung einer etwas anderen Ausführungsform der Entwässerung;

Fig. 5 zwei ineinander gesteckte Rohrabschnitte bei einer anderen Ausführungsform der Entwässerung.

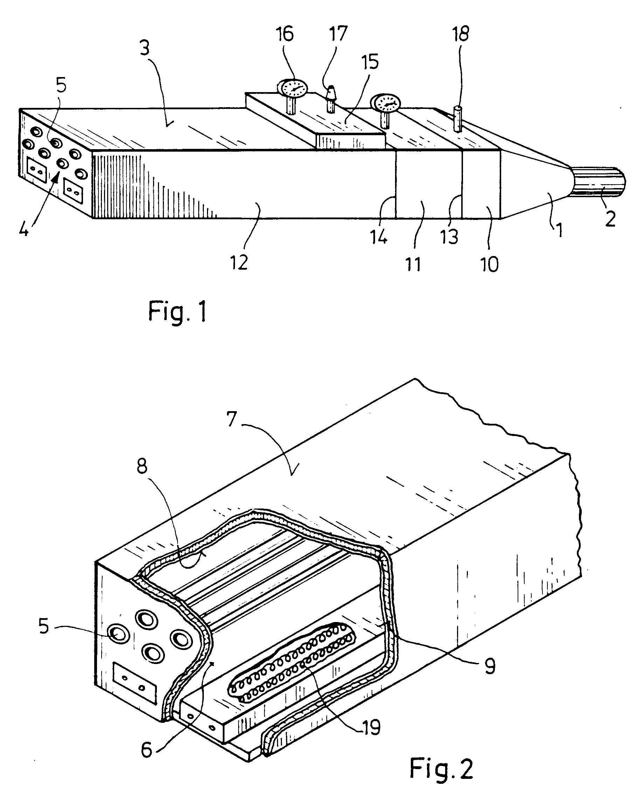

Das in den Fig. 1 und 2 dargestellte Vorsatzgerät ist über einen sich aufweitenden Verbindungsstutzen 1 mit einem Anschluß 2 an einem entsprechenden nicht dargestellten Abfüllstutzen einer Wurstmaschine, insbesondere eines Wurstfüllers angeschlossen. Am Verbindungsstutzen 1 schließt sich ein Gehäuse 3 an, in dessen Innerem ein Rohrbündel 4 aus einer Anzahl von parallel angeordneten Rohren 5 angeordnet ist. Die Rohre 5 sind mit Abstand zueinander angeordnet und von einem Wärmeträger 6 umgeben, der innerhalb des Gehäuses 3 aufgenommen ist.

Wie aus Fig. 2 deutlich hervorgeht, ist das Gehäuse 3 im dargestellten Ausführungsbeispiel durch einen äußeren Mantel 7 und einen inneren Mantel 8 gebildet, wobei zwischen dem Innenmantel und dem Außenmantel eine Isolierschicht 9 angeordnet ist. Innerhalb des Gehäuses 3 ist schließlich auch noch eine Heizeinrichtung untergebracht, die im dargestellten Ausführungsbeispiel durch spiralförmige Heizelemente 19 oder aber insbesondere durch Heizstäbe gebildet ist, die sich parallel zu den Rohren 5 des Rohrbündels 4 erstrecken. Die Anzahl und die Ausbildung der Heizelemente richtet sich nach der zu erzeugenden Temperatur und insbesondere nach der Anzahl der im Gehäuse 3 untergebrachten Rohre.

Gemäß Fig. 1 ist das Gehäuse 3 in unterschiedliche Zonen untergliedert, nämlich eine Kühlstation 10 im Anschluß an den Verbindungsstutzen 1, an die sich eine erste Wärmestation 11 und daran anschließend eine weitere Wärmestation 12 anschließt. Die einzelnen Stationen sind durch Querwände 13 und 14 voneinander getrennt, so daß jede Station eine von den anderen Stationen getrennte Kammer aufweist, innerhalb der der Wärmeträger aufgenommen ist. Die Rohre 5 durchgreifen allerdings die Querwände 13 und 14.

Gemäß Fig. 1 ist mindestens der letzten Wärmestation 12 ein Ausdehnungsbehälter 15 mit einem Thermometer 16 und einem Sicherheitsventil 17 zugeordnet. Zumindest die Kühlstation 10 ist ferner mit einem Überlauf 18 ausgestattet. Nicht dargestellt sind Ein- und Ablaßhähne für die einzelnen Stationen für die Zu- bzw. Abführung des Wärmeträgers.

Anzahl und Kaliber der Rohre kann nach Bedarf gewählt werden. Zweckmäßigerweise weisen die Rohre jedoch einen Durchmesser von 20 bis 22 mm auf. Die Länge der Rohre und damit das Gehäuse 3 beträgt bei einem Kaliber von 20 bis 22 mm etwa 3,5 m, um ein vollgares Produkt zu erhalten.

Die Regulierung der einzelnen Wärmestationen und der Kühlstation erfolgt jeweils gesteuert durch einen Thermostat. Hierbei wird in der Kühlstation im wesentlichen die Wurstmasse auf einer Temperatur gehalten, die ein einwandfreies Einbringen der vom Wurstfüller abgegebenen rohen Wurstmasse in die Rohranordnung gewährleistet. In der anschließenden ersten Wärmestation 11 erfolgt eine Erhitzung der Wurstmasse auf eine Temperatur unterhalb 50° Celsius, also unterhalb der Gerinnungstemperatur des Eiweißes. Zweckmäßigerweise erfolgt die Erwärmung in diesem Bereich auf 45° Celsius bis 48° Celsius. In der gegenüber der Wärmestation 11 wesentlich länger ausgebildeten Zone 12 erfolgt eine schonende allmähliche Erhitzung der Wurstmasse auf die gewünschte Gartemperatur von 75° Celsius bis 90° Celsius.

Beim Betrieb des Vorsatzgeräts wird die Wurstmasse kontinuierlich von dem Wurstfüller durch eine Anzahl von Rohren bewegt, die in dem umgewälzten Wärmeträger liegen, der eine konstante Temperatur in den beiden Stationen von 45 bis 48° Celsius bzw. 75 bis 90° Celsius aufweist, um während des Durchganges umzuröten, zu koagulieren und durchzugaren. Beim Austritt aus den Rohren wird der Wurststrang dann von Hand oder automatisch auf gewünschte Länge abgeschnitten. Die Länge der Rohre wird durch das Kaliber bzw. den Garzustand bestimmt (65 bis 72° Celsius Kerntemperatur).

Selbstverständlich kann das Gerät je nach gewünschter Kapazität mit beliebig vielen Rohren in verschiedenen Formen und/oder Kalibern ausgestattet werden. Die Aufheizung des Wärmeträgers erfolgt durch Elektrizität, Gas, Öl, Dampf oder eine sonstige geeignete Einrichtung. Die Rohre, aber auch das Gehäuse des Geräts sind zweckmäßigerweise aus rostfreiem Stahl hergestellt.

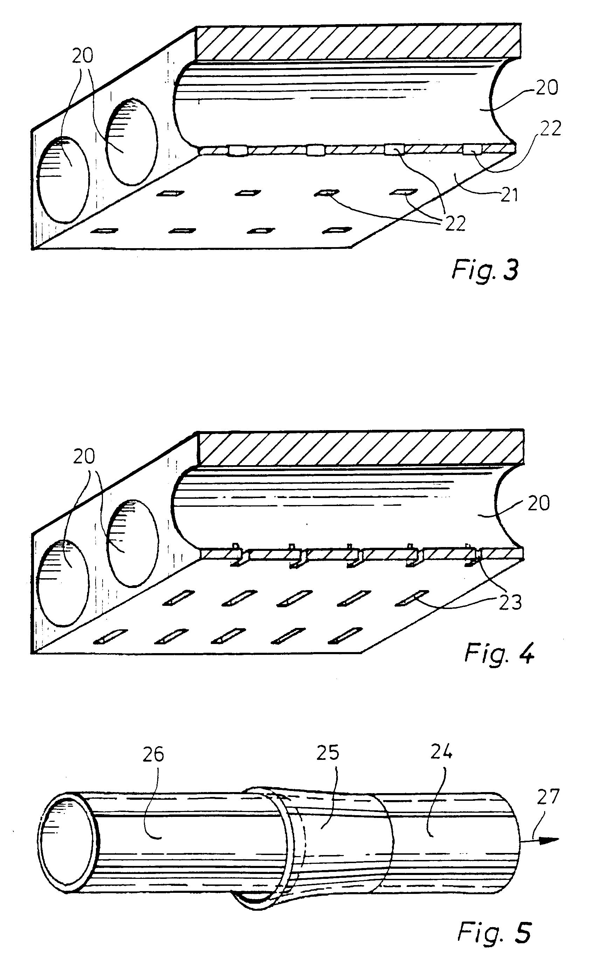

Bei der in den Fig. 3 und 4 dargestellten Ausführungsform der Erfindung sind die das Brät führenden Rohre durch rohrförmige Aussparungen 20 in einem Materialblock 21 verwirklicht. Die vordere Aussparung 20 ist geschnitten dargestellt, wobei der Schnitt durch den Block 21 hindurchgeführt ist. Bei der in Fig. 3 dargestellten Ausführungsform sind an der Unterseite der rohrförmigen Aussparungen 20 längs, also parallel zur Rohrachse, verlaufende, kleine Schlitze 22 vorgesehen, durch die die beim Garen bzw. Kochen des Brätes freiwerdende Flüssigkeit austreten kann.

Die in Fig. 4 dargestellte Ausführungsform der Erfindung unterscheidet sich von der Ausführungsform nach Fig. 3 dadurch, daß am Boden der rohrförmigen Aussparungen 20 vorgesehene schlitzförmige Aussparungen 23 quer zur Rohrachse der Aussparungen 20 verlaufen, jedoch ebenfalls am tiefsten Punkt der Aussparungen 20 angeordnet sind.

Bei der Ausführungsform nach Fig. 5 ist ein Rohrabschnitt 24 mit einem muffenförmig sich erweiternden Abschnitt 25 versehen, in den ein anschließender Rohrabschnitt 26 so eingesteckt ist, daß zwischen der Innenwand der sich trichterförmig erweiternden Muffe 25 und der Außenwand des Rohrabschnittes 26 am Ende dieses Abschnittes ein ringförmiger Spalt verbleibt, durch den beim Garen und Kochen aus dem Brät freiwerdende Flüssigkeit austreten kann. Das Brät wird durch die Rohrabschnitte 24, 26 in Richtung des Pfeiles 27 bewegt, die Muffe 25 erweitert sich also gegen die Strömungsrichtung des Brätes.

**Patentansprüche**

1.  Vorsatzgerät für einen Wurstfüller zur Herstellung darmloser Würste, mit einer am Abfüllstutzen des Wurstfüllers anschließbaren, mehrere hintereinander geschaltete Wärmestationen (11, 12) aufweisenden Rohranordnung, dadurch gekennzeichnet, daß der Rohranordnung vor der ersten Wärmestation (11) eine Kühlstation (10) vorgeschaltet ist und daß die Rohranordnung mit dem Abfüllstutzen über einen sich zur Rohranordnung hin aufweitenden Verbindungsstutzen (1) verbunden ist, an den sich ein aus einer Anzahl von parallel angeordneten Rohren (5) bestehendes Rohrbündel (4) anschließt.

2.  Gerät nach Anspruch 1, dadurch gekennzeichnet, daß die Rohranordnung hinter dem Verbindungsstutzen (1) eine erste Wärmestation (11) durchläuft, in der die Wurstmasse auf eine Temperatur unterhalb 50° Celsius erwärmt wird und der sich eine weitere Wärmestation (12) anschließt, in der die Wurstmasse auf eine Temperatur oberhalb 50° Celsius erwärmt wird.

3.  Gerät nach einem der vorhergehenden Ansprüche, dadurch gekennzeichnet, daß die Rohre (5) der Rohranordnung in einen beheizbaren Wärmeträger (6) eingebettet sind, der von einem isolierenden Mantel umgeben ist.

**4.** Gerät nach einem der vorhergehenden Ansprüche, dadurch gekennzeichnet, daß die Kühl- und Wärmestationen der Rohranordnung durch Querwände (13, 14) zur Bildung separater Kammern zur Aufnahme des Wärmeträgers voneinander abgetrennt sind.

**5.** Gerät nach einem der vorhergehenden Ansprüche, dadurch gekennzeichnet, daß das Gerät mindestens einen Ausdehnungsbehälter (15) für den Wärmeträger mit Sicherheitsventil (17) aufweist.

**6.** Gerät nach einem der vorhergehenden Ansprüche, dadurch gekennzeichnet, daß die Rohrabschnitte (5), in denen das Brät erwärmt werden soll, aus einem für Mikrowellen durchlässigen Werkstoff bestehen und daß als Heizquelle Mikrowellen erzeugende Einrichtungen vorgesehen sind.

**7.** Gerät nach einem der vorhergehenden Ansprüche, dadurch gekennzeichnet, daß auf die erste Wärmestation (11) ein vorzugsweise unbeheizter Rohrabschnitt folgt, in dem das Brät höchstens die in der ersten Wärmestation (11) erlangte Temperatur aufweist.

**8.** Gerät nach einem der vorhergehenden Ansprüche, dadurch gekennzeichnet, daß an den Rohrwandungen Vorrichtungen (22, 23) zum Abführen von beim Garen oder Kochen des Brätes freiwerdender Flüssigkeit aus dem Rohrquerschnitt vorgesehen sind.

**9.** Gerät nach einem der vorhergehenden Ansprüche, dadurch gekennzeichnet, daß Rohrabschnitte (24) muffenförmig erweiterte Endabschnitte (25) aufweisen, in die der nächste Rohrabschnitt (26) unter Bildung eines ringförmigen Spaltes eingesteckt ist.

**10.** Gerät nach Anspruch 8 oder 9, dadurch gekennzeichnet, daß zum Entwässern dienende Aussparungen (22, 23) in mindestens eine Sammelleitung münden, die die Flüssigkeit ggf. durch eine Heizquelle oder durch ein Heizmedium hindurch nach außen abführt.

**Claims**

**1.** Attachment device for a sausage filler for production of skinless sausages with a pipe configuration connectable to the filling pipe of the sausage filler and having several heating stations (11, 12) connected in series, characterized in that a cooling station (10) precedes the pipe configuration prior to the first heating station (11) and that the pipe configuration is connected to the filling pipe via a connecting pipe (1) widening towards the pipe configuration and a pipe bundle (4) consisting of a plurality of parallel arranged pipes (5) is connected to said connecting pipe.

**2.** Device according to claim 1, characterized in that the pipe configuration passes after the connecting pipe (1) through a first heating station (11) in which the sausage mixture is heated to a temperature below 50° Celsius and to which a further heating station (12) is connected in which the sausage mixture is heated to a temperature above 50° Celsius.

**3.** Device according to any of the preceding claims, characterized in that the pipes (5) of the pipe configuration are embedded in a heatable heat transfer medium (6) which is coated by an insulating jacket.

**4.** Device according to any of the preceding claims, characterized in that the cooling and heating stations of the pipe configuration are separated by transverse walls (13, 14) in order to form separate chambers for retaining the heat transfer medium.

**5.** Device according to any of the preceding claims, characterized in that the device has at least one expansion container (15) for the heat transfer medium with a safety valve (17).

**6.** Device according to any of the preceding claims, characterized in that the pipe sections (5) in which the mixture is to be heated consist of a material permeable to microwaves and that units producing microwaves are provided as heating source.

**7.** Device according to any of the preceding claims, characterized in that the first heating station (11) is succeeded by a preferably not heated pipe portion in which the mixture has at maximum the temperature obtained in the first heating station (11).

**8.** Device according to any of the preceding claims, characterized in that at the pipe walls, units (22, 23) are provided for transporting liquid resulted from cooking the mixture at hot or boiling temperature out of the transverse section of the pipe.

**9.** Device according to any of the preceding claims, characterized in that pipe portions (24) have end portions (25) extending in a socket-joint manner and into which the next pipe portion (26) is inserted by forming a ring-shaped gap.

10. Device according to claim 8 or 9, characterized in that recesses (22, 23) serving for drainage end into at least one collecting duct which transports the liquid, if necessary, through a heating source or through a heating medium to the outside.

## Revendications

1. Adaptateur pour un dispositif à bourrer des saucisses, pour la fabrication de saucisses sans boyau, comprenant un agencement de conduits qui peut être raccordé à la tubulure de remplissage du dispositif à bourrer les saucisses et qui présente plusieurs postes de chauffage (11, 12) montés l'un derrière l'autre, caractérisé en ce qu'un poste de refroidissement (10) est monté en amont de l'agencement de conduits avant le premier poste de chauffage (11) et en ce que l'agencement de conduits est raccordé à la tubulure de remplissage par une tubulure de raccordement (1) qui s'élargit vers l'agencement de conduits et à laquelle se raccorde un faisceau de conduits (4) constitué par une pluralité de conduits (5) agencés parallèlement.

2. Adaptateur suivant la revendication 1, caractérisé en ce que l'agencement de conduits après la tubulure de raccordement (1) passe au travers d'un premier poste de chauffage (111 dans lequel la masse de saucisse est chauffée à une température inférieure à 50° Celsius et qui est raccordé à un autre poste de chauffage (12) dans lequel la masse de saucisse est chauffée à une température supérieure à 50° Celsius.

3. Adaptateur suivant l'une des revendications précédentes, caractérisé en ce que les conduits (5) de l'agencement de conduits sont insérés dans un élément caloriporteur (6) qui peut être chauffé et qui est entouré par une enveloppe isolante.

4. Adaptateur suivant l'une quelconque des revendications précédentes, caractérisé en ce que les postes de refroidissement et de chauffage de l'agencement de conduits sont séparés l'un de l'autre par des parois transversales (13, 14) pour la formation de chambres séparées l'une de l'autre pour le logement de l'élément caloriporteur.

5. Adaptateur suivant l'une quelconque des revendications précédentes, caractérisé en ce que l'adaptateur présente au moins un récipient d'expansion (15) pour l'élément caloriporteur, avec soupape de sécurité (17).

6. Adaptateur suivant l'une quelconque des revendications précédentes, caractérisé en ce que les sections de conduit (5) dans lesquelles doit être chauffée la matière à cuire sont constituées en un matériau perméable aux micro-ondes et en ce que des dispositifs produisant des micro-ondes sont prévus comme source de chaleur.

7. Adaptateur suivant l'une quelconque des revendications précédentes, caractérisé en ce qu'après le premier poste de chauffage (11) suit une section de conduit de préférence non chauffée dans laquelle la matière à cuire présente au plus la température obtenue dans le premier poste de chauffage (11).

8. Adaptateur suivant l'une quelconque des revendications précédentes, caractérisé en ce que sont prévus sur les parois de conduit des dispositifs (22, 23) pour l'évacuation hors de la section de conduit de fluide libéré lors de la cuisson ou de l'ébullition de la matière à cuire.

9. Adaptateur suivant l'une quelconque des revendications précédentes, caractérisé en ce que des sections de conduit (24) présentent des sections d'extrémité (25) élargies en forme de manchon dans lesquelles la section de conduit (26) suivante est enfoncée en formant une fente annulaire.

10. Adaptateur suivant l'une ou l'autre des revendications 8 et 9, caractérisé en ce que des évidements (22, 23) servant au drainage débouchent dans au moins une conduite collectrice qui évacue le fluide vers l'extérieur éventuellement au travers d'une source de chaleur ou au travers d'un milieu chauffant.

Fig. 1

Fig. 2

Fig. 3

Fig. 4

Fig. 5